# EUROPÄISCHE PATENTSCHRIFT

(11) **EP 1 004 557 B1**
(45) Veröffentlichungstag und Bekanntmachung des Hinweises auf die Patenterteilung: **05.12.2001**
(21) Anmeldenummer: 99117567.0
(22) Anmeldetag: 06.09.1999
(51) Int. Cl.: C04B 28/04, C04B 24/38, C09K 17/44, C04B 111/10

(54) **Hydraulische Injektions-Bindemittelzusammensetzung**
Injectable hydraulic binder composition
Composition de liant hydraulique injectable

(30) Priorität: 25.11.1998 DE 19854478
(43) Veröffentlichungstag der Anmeldung: 31.05.2000
(73) Patentinhaber: DYCKERHOFF AKTIENGESELLSCHAFT, D-65203 Wiesbaden (DE)
(72) Erfinder: Mitkova, Darina, Dr., 55276 Oppenheim (DE); Bechtoldt, Cristian, 65197 Wiesbaden (DE); Umlauf, Reinhold, Dr., 65193 Wiesbaden (DE)
(74) Vertreter: Patentanwälte Dr. Solf & Zapf

(56) Entgegenhaltungen:
- EP-A- 0 631 994
- EP-A- 0 696 558
- EP-A- 0 755 992
- WO-A-97/22564
- DE-A- 19 653 524
- CHEMICAL ABSTRACTS, vol. 112, no. 20, 14. Mai 1990 (1990-05-14) Columbus, Ohio, US; abstract no. 184837p, M. NEJEZCHLEB: Seite 351; XP000151665 & CS 260 577 A (ID.)
- DATABASE WPI Week 199426 Derwent Publications Ltd., London, GB; AN 1994-211001 XP002130930 & JP 06 145662 A (NIPPON CHEM IND CO, ET AL.)

## Beschreibung

Die Erfindung betrifft eine hydraulische Bindemittelzusammensetzung zur Herstellung von Injektionssuspensionen, die geeignet sind, mit einem Niederdruckinjektionsverfahren in Böden oder Fels oder dergleichen zum Abdichten und/oder Verfestigen eingepreßt zu werden.

Bekannt ist die Verwendung von Injektionssuspensionen zur Verfestigung und/oder Abdichtung von Böden oder Fels mit Bindemittelzusammensetzungen, die neben hauptsächlich sulfatträgerfreien Zementen stets einen Bentonitzusatz aufweisen (Charvat, I.: Special clay-cement mixtures for injection and grouting, Prace vyzkumniho ustavu geologickeho inzinyrstvi, Sv. XXXIX, Brno (Brünn), 1987). Der Bentonitzusatz liegt zwischen 2 und 15 M% und dient zur Stablisierung der Suspension gegen Absetzen der Feststoffteilchen. Das Klinkermehl wird mit einer Feinheit von 7 200 cm²/g verwendet. Es wird je eine Rezeptur zur Abdichtung oder Verfestigung beschrieben, die in der Menge des Bentonits und des Wasserbindemittelwerts variieren.

In der CS-PS 260 577 wird eine Injektionssuspension zur Abdichtung und Verfestigung von Fels und Lockergestein beschrieben, die auf Klinkermehl mit einer spezifischen Oberflächen über 6 000 cm²/g basiert. Die Suspension enthält weniger als 3 M% Ligninsulfonat oder dergleichen, bis 3 M% Alkalicarbonat und gegebenenfalls Verzögerer auf Basis organischer Säuren. Die Verwendung im Niederdruckinjektionsverfahren bzw. Penetrationsinjektionsverfahren, bei dem Drücke unter 100 bar angewendet werden, und die sich dadurch auszeichnen, daß das Gefüge des injizierten Bodens oder Fels nicht zerstört wird, wird nicht beschrieben. Vielmehr wird angegeben, daß Böden jeglicher Feinheit verfestigt werden, woraus resultiert, daß in jedem Fall das Hochdruckinjektionsverfahren angewendet werden soll.

Nach dem Stand der Technik ist die Verwendung feststoffhaltiger Suspensionen auf Böden mit Feinstsandanteilen (Korngrößen < 0,2 mm) bis zu 90 % beschränkt. Ab einem Schluffanteil (Korngrößen < 0,063 mm) von etwa 10 % ist eine Niederdruckinjektions mit feststoffhaltigen Suspensionen nicht mehr möglich.

Aufgabe der Erfindung ist, hydraulische Bindemittelzusammensetzungen anzugeben, die geeignet sind, im Niederdruckinjektionsverfahren (< 100 bar Preßdruck) verwendet zu werden und insbesondere geeignet sind, auch Böden mit etwa 10 % und mehr Schluffanteil abzudichten und zu verfestigen, wobei aus der Bindemittelzusammensetzung Injektionssuspensionen herstellbar sein sollen, die bezüglich Sedimentation stabil sind und ein verbessertes Eindringvermögen aufweisen.

Diese Aufgabe wird durch die Merkmale des Anspruchs 1 gelöst. Weitere Ausführungsformen der Erfindung werden in den Unteransprüchen gekennzeichnet.

Wesentlich ist, daß sulfatträgerfreie Feinst-Klinkermehle verschiedener Feinheit, z.B. Mehle mit d₉₅ < 25 *µ*m oder d₉₅ < 16 *µ*m oder d₉₅ < 9 *µ*m oder d₉₅ < 6,5 *µ*m verwendet werden. Diese Klinkermehle können kombiniert werden mit mindestens einem inerten fein gemahlenen Gesteinsmehl, z.B. mit Kalksteinmehl und/oder mindestens einem puzzolanischen Stoff wie Trass, Mikrosilika, Flugasche, Metakaolinit, Zeolithe unbehandelt oder getempert und/oder mit mindestens einem latent hydraulischen Stoff, wie Hüttensandmehl, jeweils gleicher oder höherer Feinheit. Darüber hinaus können weitere hydraulische Stoffe wie Calciumsilikate und/oder Calciumaluminate allein oder in Kombination enthalten sein.

Die Bindemittelzusammensetzung enthält zudem mindestens einen Erstarrungsverzögerer, gegebenenfalls einen plastifizierenden Erstarrungsverzögerer. Zu dieser Gruppe von Zusatzmitteln gehören auch: Celluloseether (Methyl-, Ethyl- und/oder Propylether); mono- und/oder poly-Saccharide (Fructose, Glucose u.s.w.); Acrylsäure und deren Salze; Oxycarbonsäuren und deren Salze (z.B. Citronensäure); Phosphorsäuren und deren Salze; Borsäure und deren Salze; Alkylamide; Styrol-Butadien.

Die Bindemittelzusammensetzung nach der Erfindung kann auch einen Beschleuniger enthalten. Beschleuniger können die folgenden Zusatzmittel sein: Alkalicarbonate oder Alkalibicarbonate; Ca(NO₃)₂ Calciumnitrat; Alkalisilikate; Alkalihydroxide; Erdalkalihydroxide (z.B. Ba(OH)₂; Chloride mehrwertiger Kationen (z.B. CaCl₂, CrCl₃) ; Alkalisulfate; Alkalipyrosulfite (z.B. K₂S₂O₅) ; Aminverbindungen (z.B. Triethanolamin); Calciumformiat.

Die erfindungsgemäße Bindemittelzusammensetzung weist zudem mindestens ein Fließmittel auf, beispielsweise enthält es ein sulfonatgruppenfreies Fließmittel, vorzugsweise ein Polycarboxylat, insbesondere ein modifiziertes Polycarboxylat, die beispielsweise in der DE 196 53 524 A1 beschrieben werden. Des weiteren ist es möglich, auch andere bekannte sulfonatgruppenfreie Fließmittel, gegebenenfalls anstelle der Polycarboxylate, insbesondere aber in Kombination damit zu verwenden. Beispielsweise sind dies Zusatzmittel aus der Gruppe der Polyacrylate oder Polyasparaginsäuren; letztere können jedoch auch zu den Polycarboxylaten gerechnet werden. Bei den Polycarboxylaten handelt es sich meist um Homo- oder Copolymere carboxylgruppenhaltiger Monomerer, deren Seitenketten modifiziert sind (ConChem-Journal, 5. Jahrgang 4/97, S. 147). Weitere geeignete Fließmittel sind z.B. Ligninsulfonate, sulfonierte Melamin-Formaldehydharze und Naphthalinsulfonate.

Die Feinheit der Bindemittelzusammensetzung hängt von der Spaltweite des zu injizierenden Spaltsystems im Fels oder vom Feinsandanteil bzw. Schluffanteil des zu injizierenden Bodens ab. Außerdem ist die Menge der Zusatzmittel auf die Feinheit des Bindemittels abzustimmen.

Aus den erfindungsgemäßen Bindemittelzusammensetzungen können Injektionen zur Verfestigung und/oder Abdichtung von Baugrund (Lockergesteinen) hergestellt werden. Die Injektionssuspensionen sind außerdem zur Immobilisierung von Schadstoffen im Boden und für verfestigende und/oder abdichtende Felsinjektionen (Spalte/Klüfte/Hohlräume) verwendbar. Dabei kommt es darauf an, daß die Felsinjektionen schnell abdichtend wirken.

Suspensionen aus den erfindungsgemäßen Bindemittelzusammensetzungen ergeben ein erheblich verbessertes Injektionsverhalten bei niedrigem Injektionsdruck, eine schnelle Frühfestigkeitsentwicklung mit höheren Frühfestigkeiten und/oder eine bessere Abdichtungswirkung bei Temperaturen insbesondere zwischen 5 und 15°C. Die Suspensionen sind außerdem umweltverträglich und - was für die Arbeitssicherheit von großem Nutzen ist - chromatarm. Sie verursachen insofern keine entsprechenden Erkrankungen bzw. Allergien.

Anhand der folgenden Beispiele wird die Erfindung näher erläutert.

### Beispiel 1

Für eine Injektion in einen Boden mit hohem Feinsandanteil von etwa 50 % sind folgende Suspensionen zur Abdichtung und Verfestigung geeignet:

| | |
|---|---|
| Feinheit eines Portlandzementklinkerfeinmehls oder dergleichen hydraulischen Bindemittels | 0 - 6 µm |
| | |
| Erstarrungsverzögerer | 0,1 - 2,0 M% (bzgl. Klinkermehl) |
| | |
| Verflüssiger/Fließmittel | 0,1 - 5,0 M% (bzgl. Klinkermehl) |
| | |
| Stabilisierer gegen Sedimentation | 0,01 - 1,0 M% (bzgl. Klinkermehl) |
| | |
| Wasser/Bindemittelwert | 0,4 - 5,0. |

### Beispiel 2

Injektionssuspensionen für Böden mit mittlerem Feinsandanteil (etwa 20 %) können die folgende Zusammensetzung aufweisen:

| | |
|---|---|
| Feinheit eines Portlandzementklinkerfeinmehls oder dergleichen hydraulischen Bindedmittels | 0 - 15 µm |
| | |
| Erstarrungsverzögerer | 0,1 - 1,5 M% (bzgl. Klinkermehl) |
| | |
| Verflüssiger/Fließmittel | 0,1 - 4,0 M% (bzgl. Klinkermehl) |
| | |
| Erhärtungsbeschleuniger | 0,5 - 2,0 M% (bzgl. Klinkermehl) |
| | |
| Stabilisierer gegen Sedimentation | 0,01 - 1,5 M% (bzgl. Klinkermehl) |
| | |
| Wasser/Bindemittelanteil | 0,4 - 5,0. |

### Beispiel 3

In Böden ohne Feinsandanteil können folgende Injektionssuspensionen eingebracht werden:

| | |
|---|---|
| Feinheit eines Portlandzementklinkerfeinmehls oder dergleichen hydraulischen Bindemittels | 0 - 30 µm |
| | |
| Erstarrungsverzögerer | 0,1 - 1,0 M% (bzgl. Klinkermehl) |
| | |
| Verflüssiger/Fließmittel | 0,1 - 3,0 M% (bzgl. Klinkermehl) |
| | |
| Stabilisierer gegen Sedimentation | 0,01 - 2,0 M% (bzgl. Klinkermehl) |
| | |
| Wasser/Bindemittelwert | 0,6 - 4,0. |

Die folgenden beiden Beispiele 4 und 5 verdeutlichen die Wirkung der Erfindung.

Bei den Beispielen 4 und 5 wurden Injektionsversuche im Labor durchgeführt. Die Injizierfähigkeit von Injektionsbindemitteln kann im Labormaßstab z.B. nach dem "vorläufigen Merkblatt für Einpreßarbeiten mit Feinstbindemitteln in Lockergestein" geprüft werden. Hierbei werden die Injektionsbindemittel in einem eindimensionalen Durchströmungsversuch an definierten Modellsanden getestet. Die Einbauhöhe des Modellsandes in den Prüfzylinder muß mindestens eine Höhe von 20 cm aufweisen. Das Injektionsbindemittel wird als "injizierfähig" beurteilt, wenn eine zwei- bis dreifache Durchströmung des Modellsandes mit einem Injektionsdruck von maximal 6 bar möglich ist.

### Beispiel 4

Für das Beispiel 4 wurde eine Rezeptur einer Injektionssuspension folgender Zusammensetzung verwendet:
sulfatträgerhaltiges Portlandzementklinkerfeinstmehl
0,5 M% Verzögerer (Citronensäure)
1,0 M% Fließmittel (Naphthalinsulfonat)
0,03 M% Stabilisierer (Xanthan)
Wasser/Bindemittelwert: 0,9.

Die Korngrößenverteilung in der Suspension betrug: d₉₅ < 9,5 *µ*m. Die Auslaufzeit der Suspension nach Marsh betrug unter 40 Sekunden. Die Sedimentation betrug 0 %.

Als Modellsand wurde Quarzsand (Typ: F31) mit einem Feinanteil von etwa 20 M% < 0,2 mm verwendet.

Als Injizierfähigkeit ergab sich eine zweifache Durchströmung des Modellsandes mit einem Injektionsdruck von etwa 6 bar.

### Beispiel 5

Gemäß Beispiel 5 wurde die gleiche Rezeptur wie im Beispiel 4 verwendet. Im Unterschied zu Beispiel 4 wurde jedoch ein sulfatträgerfreies Portlandzementklinkerfeinstmehl verwendet.

In überraschender Weise konnte eine vierfache Durchströmung des Modellsandes mit einem Injektionsdruck von etwa 1 bar erzielt werden. Aus diesem Ergebnis ergibt sich eine deutlich besseres Injektionsverhalten als im Beispiel 1.

Die überraschende Wirkung ergibt sich aus der Verwendung eines ausgewählten Stabilisierers. Nach der Erfindung werden Stabilisierer aus der Gruppe der mikrobiellen Polysaccharide verwendet. Dies sind synthetische Biopolymere von denen insbesondere Xanthan und Welan für die erfindungsgemäßen Zwecke geeignet sind.

Besonders geeignete Biopolymere sind z.B. in einem Velco Prospekt: "Xanthan Gum", Seite 1 bis 24 beschrieben und insbesondere auf Seite 1, Spalte "Microbial polysaccharides" genannt. Es handelt sich um Dextran, Gellan gum, Rhamsan gum, Welan gum, Xanthan gum.

Es ist überraschend, daß die Verwendung eines Stabilisierers, der regelmäßig den Injektionsdruck erhöht, zu der erheblich besseren Injizierbarkeit führt, wenn eine besondere Auswahl getroffen wird. Die ausgewählten mikrobiellen Polysaccharide wirken kombinatorisch mit der Verwendung eines sulfatträgerfreien hydraulischen Feinstbindemittels. Diese überraschende Wirkung ergibt sich aus den Beispielen 4 und 5.

Die Verwendung eines sulfatträgerfreien Bindemittels bewirkt zudem, daß die Suspension chromatfrei ist, weil die Chromkomponente im Klinkerfeinstmehl durch Hydratphasen eingebunden wird. Insofern ergibt sich ein synergistischer Effekt.

Die aus einer erfindungsgemäßen hydraulischen Injektions-Bindemittelzusammensetzung hergestellten Suspensionen zeigen einen verbesserten Erhärtungsverlauf und höhere Frühfestigkeitswerte zu einem früheren Zeitpunkt. Woraus die besondere Wirkung resultiert ist noch unbekannt. Besonders wirksam sind auch die Carboxylate als Fließmittel, weil sie es ermöglichen, die Verzögerungszeitdauer genauer einstellen zu können. Eine weitere Steuerungsmöglichkeit ergibt sich aus der Verwendung von Kornfraktionen des Bindemittels, in denen beispielsweise Anteile unter einer bestimmten Korngröße ausgelassen sind. Beispielsweise kann ein Bindemittel mit Feinstanteilen zwischen 6 und 16 *µ*m verwendet werden, um die Verzögerungszeitdauer zusätzlich zu regulieren.

## Patentansprüche

1. Hydraulische Injektions-Bindemittelzusammensetzung zur Herstellung von Injektions-Suspensionen die geeignet sind, mit einem Niederdruckinjektionsverfahren in Böden oder Fels oder dergleichen zum Abdichten und/oder Verfestigen eingepreßt zu werden, enthaltend
a) ein hydraulisches gemahlenes sulfatträgerfreies Feinstbindemittel,
b) mindestens einen Erstarrungsverzögerer,
c) mindestens ein Fließmittel,
d) mindestens einen Stabilisierer aus der Gruppe der mikrobiellen Polysaccharide.

2. Injektions-Bindemittelzusammensetzung nach Anspruch 1,
**dadurch gekennzeichnet, daß** aus der Gruppe der mikrobiellen Polysaccharide mindestens ein synthetisches Biopolymer enthalten ist.

3. Injektions-Bindemittelzusammensetzung nach Anspruch 2,
**dadurch gekennzeichnet, daß** als synthetisches Biopolymer Xanthan enthalten ist.

4. Injektions-Bindemittelzusammensetzung nach Anspruch 2 und/oder 3,
**dadurch gekennzeichnet, daß** als ein synthetisches Biopolymer Welan enthalten ist.

5. Injektions-Bindemittelzusammensetzung nach einem oder mehreren der Ansprüche 1 bis 4,
**dadurch gekennzeichnet, daß** das Feinstbindemittel eine Feinheit von d₉₅ < 25 *µ*m oder d₉₅ < 16 *µ*m oder d₉₅ < 9 *µ*m oder d₉₅ < 6,5 *µ*m aufweist.

6. Injektions-Bindemittelzusammensetzung nach einem oder mehreren der Ansprüche 1 bis 5,
**dadurch gekennzeichnet, daß** das Feinstbindemittel ein Portlandzementklinkerfeinstmehl ist.

7. Injektions-Bindemittelzusammensetzung nach einem oder mehreren der Ansprüche 1 bis 6,
**dadurch gekennzeichnet, daß** das Feinstbindemittel mit mindestens einem inerten feingemahlenen Gesteinsmehl und/oder mindestens einem puzzolanischen Stoff und/oder mindestens einem latent hydraulischen Stoff jeweils gleicher oder höherer Feinheit kombiniert ist.

8. Injektions-Bindemittelzusammensetzung nach einem oder mehreren der Ansprüche 1 bis 7,
**dadurch gekennzeichnet, daß** als Erstarrungsverzögerer ein Celluloseether oder ein Mono- und/oder Polysaccharid oder eine Acrylsäure und deren Salze oder eine Oxycarbonsäure und deren Salze oder eine Phosphorsäure und deren Salze oder eine Borsäure und deren Salze oder ein Alkylamid oder ein Styrol-Butadien enthalten ist.

9. Injektions-Bindemittelzusammensetzung nach einem oder mehreren der Ansprüche 1 bis 8,
**dadurch gekennzeichnet, daß** als Beschleuniger ein Alkalicarbonat oder Alkalibicarbonat enthalten ist.

10. Injektions-Bindemittelzusammensetzung nach einem oder mehreren der Ansprüche 1 bis 9,
**dadurch gekennzeichnet, daß** als Fließmittel ein sulfonatgruppenhaltiges Fließmittel und/oder ein sulfonatgruppenfreies Fließmittel enthalten ist.

11. Injektions-Bindemittelzusammensetzung nach Anspruch 10,
**dadurch gekennzeichnet, daß** als Fließmittel ein Polycarboxylat enthalten ist.

12. Injektions-Bindemittelzusammensetzung nach einem oder mehreren der Ansprüche 1 bis 11,
**gekennzeichnet durch** folgende Zusatzmittel, jeweils bezogen auf das Feinstbindemittel:
- Erstarrungsverzögerer 0,1 - 2 M%
- Fließmittel 0,1 - 5 M%
- Stabilisierer 0,01 - 2 M%
- Wasser/Bindemittelwert 0,4 - 5,0.

13. Injektions-Bindemittelzusammensetzung nach Anspruch 12,
**gekennzeichnet durch** einen Erhärtungsbeschleuniger in Mengen von 0,5 bis 2 M%, bezogen auf das Feinstbindemittel.

## Claims

1. Hydraulic injection binder composition for the preparation of injection suspensions which are suitable for injection into soils or rock or the like for sealing and/or consolidation using a low-pressure injection process, comprising
a) a hydraulic, ground, sulphate carrier-free ultrafine binder,
b) at least one setting retardant,
c) at least one flow agent,
d) at least one stabilizer from the group consisting of microbial polysaccharides.

2. Injection binder composition according to Claim 1, **characterized in that** at least one synthetic biopolymer from the group consisting of microbial polysaccharides is present.

3. Injection binder composition according to Claim 2, **characterized in that** the synthetic biopolymer present is xanthan.

4. Injection binder composition according to Claim 2 and/or 3, **characterized in that** welan is present as a synthetic biopolymer.

5. Injection binder composition according to one or more of Claims 1 to 4, **characterized in that** the ultrafine binder has a fineness of d₉₅ < 25 µm or d₉₅ < 16 µm or d₉₅ < 9 µm or d₉₅ < 6.5 µm.

6. Injection binder composition according to one or more of Claims 1 to 5, **characterized in that** the ultrafine binder is a Portland cement clinker ultrafine powder.

7. Injection binder composition according to one or more of Claims 1 to 6, **characterized in that** the ultrafine binder is combined with at least one inert, finely ground powdered rock and/or at least one pozzolanic substance and/or at least one latently hydraulic substance, in each case of the same or greater fineness.

8. Injection binder composition according to one or more of Claims 1 to 7, **characterized in that** the setting retardant present is a cellulose ether or a mono- and/or polysaccharide or an acrylic acid and salts thereof or an oxycarboxylic acid and salts thereof or a phosphoric acid and salts thereof or a boric acid and salts thereof or an alkylamide or a styrene-butadiene.

9. Injection binder composition according to one or more of Claims 1 to 8, **characterized in that** the accelerator present is an alkali metal carbonate or alkali metal bicarbonate.

10. Injection binder composition according to one or more of Claims 1 to 9, **characterized in that** the flow agent present is a sulphonate group-containing flow agent and/or a sulphonate group-free flow agent.

11. Injection binder composition according to Claim 10, **characterized in that** the flow agent present is a polycarboxylate.

12. Injection binder composition according to one or more of Claims 1 to 11, **characterized by** the following additives, in each case based on the ultrafine binder:
- setting retardant 0.1 - 2 mol%
- flow agent 0.1 - 5 mol%
- stabilizer 0.01 - 2 mol%
- water/binder value 0.4 - 5.0.

13. Injection binder composition according to Claim 12, **characterized by** a setting accelerator in amounts of from 0.5 to 2 mol%, based on the ultrafine binder.

## Revendications

1. Composition de liant hydraulique pour injection, pour la préparation de suspensions pour injection qui sont appropriées à être injectées dans le sol ou dans une roche ou similaire, par un procédé d'injection à basse pression, pour l'étanchéification et/ou la consolidation, contenant
a) un très fin liant hydraulique broyé, exempt d'agent porteur de sulfate,
b) au moins un ralentisseur de prise,
c) au moins un fluidifiant,
d) au moins un stabilisant choisi dans le groupe des polysaccharides microbiens.

2. Composition de liant pour injection selon la revendication 1, **caractérisée en ce que** dans le groupe des polysaccharides microbiens, au moins un biopolymère synthétique est contenu.

3. Composition de liant pour injection selon la revendication 2, **caractérisée en ce que** du xanthanne est contenu en tant que biopolymère synthétique.

4. Composition de liant pour injection selon la revendication 2 et/ou la revendication 3, **caractérisée en ce que** du wélanne est contenu en tant biopolymère synthétique.

5. Composition de liant pour injection selon une ou plusieurs des revendications 1 à 4, **caractérisée en ce que** le liant très fin a une finesse de d₉₅ < 25 *µ*m ou d₉₅ < 16 *µ*m ou d₉₅ < 9 *µ*m ou d₉₅ < 6,5 *µ*m.

6. Composition de liant pour injection selon une ou plusieurs des revendications 1 à 5, **caractérisée en ce que** le liant très fin est une poudre de clinker de ciment Portland.

7. Composition de liant pour injection selon une ou plusieurs des revendications 1 à 6, **caractérisée en ce que** le liant très fin est associé à au moins une poudre de roche inerte finement broyée et/ou à au moins une matière de type pouzzolane et/ou à au moins une matière hydraulique latente, ayant chacune une finesse égale ou supérieure.

8. Composition de liant pour injection selon une ou plusieurs des revendications 1 à 7, **caractérisée en ce qu'**elle contient en tant que retardateur de prise un éther de cellulose ou un mono- et/ou polysaccharide ou un acide acrylique et ses sels ou un acide oxycarboxylique et ses sels ou un acide phosphorique et ses sels ou un acide borique et ses sels ou un alkylamide ou un styrène-butadiène.

9. Composition de liant pour injection selon une ou plusieurs des revendications 1 à 8, **caractérisée en ce qu'**elle contient en tant qu'accélérateur un carbonate de métal alcalin ou un bicarbonate de métal alcalin.

10. Composition de liant pour injection selon une ou plusieurs des revendications 1 à 9, **caractérisée en ce qu'**elle contient en tant que fluidifiant un fluidifiant contenant des groupes sulfonate et/ou un fluidifiant exempt de groupes sulfonate.

11. Composition de liant pour injection selon la revendication 10, **caractérisée en ce qu'**elle contient en tant que fluidifiant un polycarboxylate.

12. Composition de liant pour injection selon une ou plusieurs des revendications 1 à 11, **caractérisée par** les additifs suivants, chacun par rapport au liant très fin :
- retardateur de prise 0,1 - 2 % en masse
- fluidifiant 0,1 - 5 % en masse
- stabilisant 0,01 - 2 % en masse
- rapport eau/liant 0,4 - 5,0.

13. Composition de liant pour injection selon la revendication 12, **caractérisée par** la présence d'un accélérateur de durcissement en proportions de 0,5 à 2 % en masse, par rapport au liant très fin.
